# EUROPEAN PATENT APPLICATION

(11) **EP 0 531 268 A2**
(43) Date of publication of application: **10.03.1993**
(21) Application number: 92850197.2
(22) Date of filing: 18.08.1992
(51) Int. Cl.: H04Q 3/62, H04M 11/00, H04M 3/42

(54) **Business communication number**

(30) Priority: 03.09.1991 US 753974
(71) Applicant: TELEFONAKTIEBOLAGET L M ERICSSON, S-126 25 Stockholm (SE)
(72) Inventor: Hayes, John, Horsell, Woking, Surrey GU21 (GB); Schmid, Glen Herman, W-4000 Düsseldorf (DE)
(74) Representative: Lövgren, Tage

(57) **Abstract**

Method of and apparatus for completing a selected type of communication associated with a subscriber having a single business communications number within a communications network. The business communication number of the subscriber (253) and a signal indicative of a selected type of communications (254) is sent to the subscriber's communications network (111). Within the network, data (251) is stored in a table (252) associated with the subscriber's number and a secondary number associated with each one of a plurality of terminals (121-136) capable of a particular type of communication. The data (251) is accessed to obtain the secondary number (257-260), and the call is then completed from the subscriber's communications network (111) to a terminal (121-136) associated with the accessed secondary number (257-260).

## Description

### BACKGROUND OF THE INVENTION

### Field of the Invention

The invention relates to the field of business communications system and, more particularly, to communications with a number of services associated with a single subscriber.

### History of the Prior Art

Traditionally, when one party desires to effect communication with another, he or she simply dials the telephone number of that party and engages in conversation after the call is answered. Due to the high volume of telephone use in the modern workplace, the user must maintain extensive records of other persons' telephone numbers including those numbers used in sending telecopies. Typically the maintenance of such records is done manually with a card file, but increasingly the personal computer has been utilized for storage of telephone numbers. The advent of a large number of additional communication devices which are capable of serving as communications terminals for a single individual has complicated that procedure. For example, a single individual may have associated with him or her not only a conventional telephone instrument, but also a telecopy or facsimile ("fax") machine, a voice message terminal, a payer terminal, a modem associated with a computer terminal or database, and other possibilities.

In conventional telecommunications networks, it is necessary to assign a specific telephone number to each of the communications devices in order to reach that device through the network. Thus, it is also necessary for a calling party to maintain a record of the telephone number of each specific device which he wants to access in order to be able to do so. This, of course, requires either the listing of a plurality of different numbers for a single subscriber's multiple communications options or a first preliminary telephone call to the subscriber's conventional voice communications number in order to ascertain the other numbers for effecting the actual alternative communication. Further, the phone numbers associated with each person at a specific location often change due to turnover in personnel and the changes of office assignments for personnel. In addition, occasional changes in the phone number of a business itself may further complicate the maintenance of accurate telephone records, particularly where multiple services are attached to each subscriber. Neither the maintenance of detail records of all of these additional phone listings nor a preliminary investigatory phone call to ascertain such numbers lead to an efficient utilization of a business telecommunications system.

U.S. Patent No. 4,755,985 to Jayapalan, et al., discloses a system for simplifying moves and changes within a private communications network and avoiding the use of a private branch exchange (PBX). In this system, individual telephone instruments within a customer's premises have both a unique identity code which identifies that particular device as well as a directory number within the subscriber's premises. A call manager is interconnected to each of the user devices and includes a database which associates each user device with a directory number so that when a particular user moves from one physical location within the subscriber's premises to another, the directory number associated with the unique identity code of the device can simply be changed in the database. This allows each userwith- in the subscriber's premises to utilize abbreviated dialing of any other device on the premises as well as to ignore the actual directory number and simply dial a user device. One drawback of the Jayapalan, et al., system, however, is that parties calling from outside of the customer's premises must still know the actual directory number in order to reach the desired party. In addition, this system does not contemplate either multiple communication terminals associated with a single individual or use of user device identification within a PBX system.

The system of the present invention overcomes these deficiencies of the prior art by enabling communication to a single number associated with a particular subscriber in order to reach any one of a number of multiple communications service terminals associated therewith.

### SUMMARY OF THE INVENTION

In one aspect, the system of the present invention includes the storage within a database of separate telephone numbers associated with multiple communication services of a single subscriber and the return of a selected one of those numbers in response to an inquiry directed to a single business communications number, enabling the direct communication with that number by the inquiring party.

In another aspect, the invention includes a method of completing a selected type of communication associated with a subscriber having a single business communications number within a communications network in which a table containing a secondary number associated with each one of a plurality of terminals capable of a particular type of communications is stored within the subscriber's network in associate with the subscriber's business communications number. The business communication number of the subscriber and a signal indicative of a selected type of communications is sent to the subscriber's communications network. The data stored in the table is accessed to obtain the secondary number for the selected type of communications with the subscriber associated with the business communications number and a call is completed from the subscribers communications network to a terminal associated with the accessed secondary number to enable said selected type of communications with the subscriber.

In a further aspect, the invention includes a method for communicating with a telecommunication terminal in which a telephone subscriber is associated with a business communications number identifying that subscriber within a communications network a plurality of different types of communications terminals are associated with the subscriber with each terminal having a specific secondary number and each differenttype of communications having an identification code associated. A signal is sent to the communications network of the subscriber which includes the business communication number of the subscriber along with an identification code specifying which type of communications with the subscriber is requested. The communication is completed from the communications networkof the subscriber to the secondary number of the particular type of communications terminal associated with the subscriber which was specified by the identification code sent with the business communications number.

### BRIEF DESCRIPTION OF THE DRAWINGS

For a further understanding of the present invention and for further objects and advantages thereof, reference may now be had to the following description, taken in conjunction with accompanying drawings, in which:
FIG. 1 is a block diagram of a typical business communication environment;
FIG. 2 is a block diagram of a representative interconnection of PBXs;
FIG. 3 is a block diagram of a business communication environment, including the system of the present invention; and
FIG. 4 is a block diagram of a system constructed in accordance with one aspect of the present invention.

### DETAILED DESCRIPTION

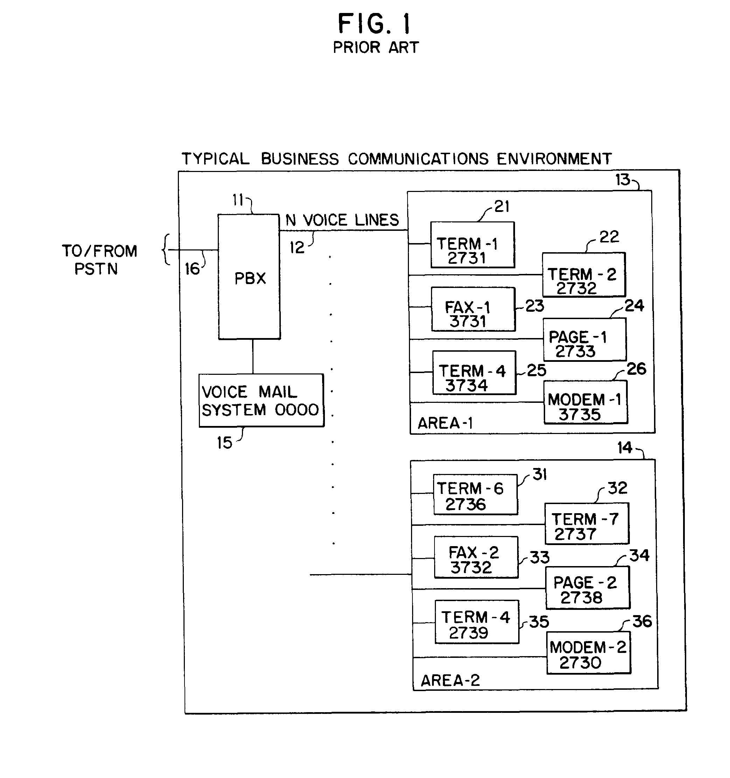

Referring first to FIG. 1, there is shown a block diagram of a typical business communications environment in which a private Branch Exchange ("PBX") serves a plurality of areas within a business subscriber's premises and which includes a PBX 11 connected by means of a plurality of voice lines 12 to communications terminals shown to be arranged in a first geographic area 13 of the customer's premises and a second geographic area 14 of the customer's premises. A voice mail system 15 is also connected to the PBX. In a typical operating environment, the PBX receives incoming calls via incoming trunks 16 from the public switched telephone network (PSTN) and distributes those calls to selected terminals in accordance with the last four digits dialed in the direct dial PBX number. For example, the number 2731 could represent a first terminal 21, such as a conventional voice telephone instrument, while the number 2732 could represent a second terminal 22 comprising a conventional voice telephone instrument. As a larger variety of more sophisticated communication terminal equipment becomes available, it is used more frequently to communicate on a conventional dial-up basis. Such equipment may be either connected to a particular terminal within a PBX system or may comprise a separate, independent number assigned from the local PSTN exchange and be part of a service provided by an outside communications supplier. In the present situation, it will be assumed that each of these services may be supplied by means of equipment connected directly to a terminal within a PBX 11. In this instance, the numbers 3731 may represent a terminal providing access to a first fax machine 23 while the number 2733 may provide access to a first paging terminal 24 to deliver messages to a subscriber. Similarly, extension 3734 may provide access to a conventional voice telephone instrument 25 while the number 3735 provides access to a first modem 26 providing data access to a computer terminal.

Also shown in FIG. 1 are terminals associated with a second area 14 which may illustratively comprise a first terminal 31 connected to a conventional voice instrument having the extension number 2736, while the number 2737 is connected to a second telecommunications instrument 32. A second fax terminal 33 is connected to station 3732 while a second page terminal 34 is connected to station 2738. Similarly, the third traditional voice telephone instrument 35 is connected to the number 2739, while a second modem 36 is connected to the number 2730.

The voice mail system 15 is shown being connected directly to the PBX and provides for access by simply dialing a general number, such as 0000, to access the voice mail system and then requires the dialing of a separate series of digits corresponding to the extension number of the party forwhom the voice mail message is to be left. It should also be understood that the voice mail system could be adapted to provide access to a specific voice mailbox by assigning a particular station to that mailbox in the same way a terminal is assigned in one of the areas shown in FIG. 1.

When a party desires to access any one of the terminals shown in FIG. 1, it is required that the specific telephone number be dialed from the PSTN through one of the incoming trunks 16, the PBX 11 and a selected one of the voice lines 12 in order to reach one of the terminals 21-36 in either of the two areas 13 or 14 within the business communication environment. Without having the specific number, which is obtained either from a separate listing of the particular service or by dialing a directory assistance operator within the PBX system, one cannot reach a specific communications service desired for a specific subscriber.

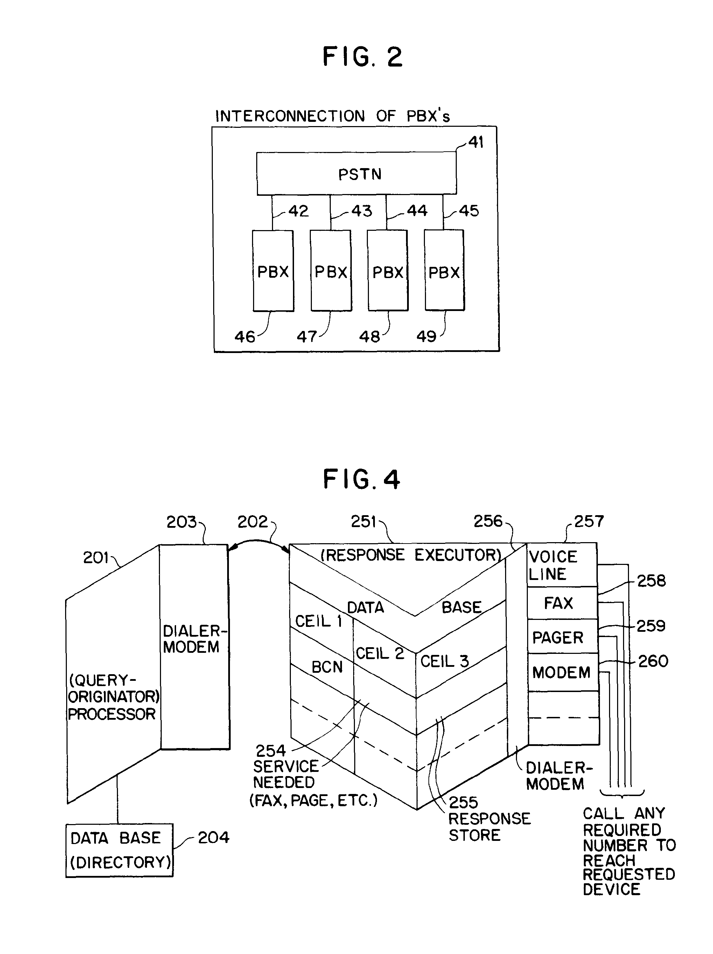

Referring now to FIG. 2, it is shown how PBX systems are conventionally interconnected with one another through a PSTN 41 which is connected by means of trunks 42-45 to a plurality of different PBXs 46-49.

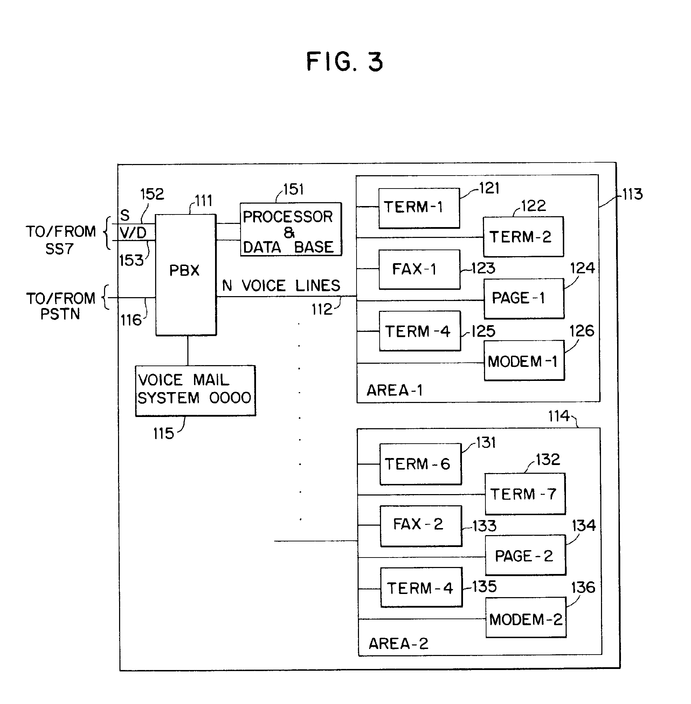

Referring next to FIG. 3, there is shown a system constructed in accordance with the teachings of the present invention which enables ready access to a plurality of different peripheral telephone equipment terminals for a particular subscriber in response to dialing a single business communications number. In general, the system of the present invention includes the allocation of a single business communication number (BCN) to each business telephone subscriber within the system. The originating caller dials the BCN on either a private communications network or the conventional PSTN network and sends a signal, to the terminating telecommunication equipment and requests information as to how to terminate a call to the business telephone communication subscriber identified by the BCN and requiring an indicated specified service, such as voice, fax, modem, etc. The terminating peripheral equipment, upon receiving the request, determines the number, which may or may not be different from the BCN currently allocated to the subscriber for the specified service and returns this number to the originating requesting telecommunication equipment. The originating communication equipment then sets up the call, of whatevertype it is, such as voice, fax, modem, paging, etc, to the number received from the terminating telecommunications equipment. Alternatively, the terminating equipment may route the call from the originator to the specified terminating equipment of the subscriber identified by the BCN. It should be noted that this system does not require the existence of an integrated services digital network (ISDN) for either setup or call control.

In FIG. 3, the system constructed in accordance with the present invention is shown to be implemented in a similar PBX environment which includes a PBX 111 connected by N voice lines 112 to terminals located within two areas, 113 and 114, of the customer's premises. Terminals 121-126 comprise different actuatable terminals which may include either voice communication stations or auxiliary communication terminals such as fax, modem, page, etc. Similarly, terminals 131-136 also comprise terminals including voice telephone instruments, as well as fax, data, modem, etc., located at the second location 114 on the subscriber's premises. Typically, some or all of terminals 121-126 or 131-136 will be associated with a specific telephone user whose physical location is in area 113. Similarly, certain terminals such as those associated with fax will be shared by different users in that area. The present invention identifies those relationships through the BCN and allows interconnection with those terminals without specific reference to the full telephone number of the terminal by a requesting party. Avoice mail system is shown connected to the PBX and it is coupled to and from the PSTN by a plurality of trunks 116.

In the system of FIG. 3, there is also included a processor and database 151 which implements certain aspects of the system of the present invention. In addition, the PBX is also shown to be connected to and from a private data network via signalling lines 152 and voice/data lines 153. It should be understood that the system of the present invention may be implemented either in a PSTN environment or in a private data network environment.

As implemented in FIG. 3, the system enables the placing of calls from outside the subscriber's premises into the PBX eithervia the PSTN trunks 116 or the private network lines 152-153 and directed to a business communications number. Upon receipt by the PBX 111, the call is directed to the processor and database 151, in which the business communication number responds to an additional digit, either sent immediately following the BCN on the private data communications line or in response to an answerback on the PSTN lines by the processor and database indicating the readiness to accept such an additional digit. The additional digit, which may include a "*" or "#" or any other digit, identifies the particular type of service that the calling party desires to implement with respect to the party associated with the business communication number. Thereafter, the processor 151 consults the database for the associated terminal and then implements the connection through the PBX 111 enabling the desired communication. If the equipment, such as modem, payer, or fax is associated with one of the terminals 121-126 or 131-136 as a station on the PBX, the connection is completed through the PBX 111. If, however, the equipment indicated to be requested by the originating party is not within the PBX system, an outgoing call is placed by the processor and database 151 via the PSTN trunks 116 to a remote location at which the connection is made for the calling subscriber. It should be understood that such termination may be either made at one of the terminals within the PBX or made at a remote location, such as a third party number. In either case, dialing to a single business communication number associated with the identification of the particular service which is desired, enables the completion of the call requested by the calling party without the need to look up a new number or have direct conversation with the BCN associated party.

Referring further to FIG. 3, a requesting party may desire to send a fax to the user identified by a telephone number associated with first terminal 121. The fax machine identified with that user may be first fax 123 which has its own unique seven digit telephone number. Under the present invention, the relationship of the user associated with first terminal 121 to the first fax 123 is maintained in the processor and database 151 by reference to the BCN associated with that user. Likewise, other users in first area 113 may also be associated with first fax 123 through their unique BCN. If the user identified to first terminal 121 is relocated to second area 114, changes in the processor and database 151 can be made so that the new relationships of user to ancillary communications terminals can be rearranged without changing that user's BCN. This allows an outside requesting party to access the user and all the peripheral equipment associated with that user by continuing to use the unique BCN associated with the user.

Referring still to FIG. 3, if a particular piece of equipment requested by the originating party is not within any area associated with the PBX, the processor and database 151 can also identify that situation and place an outgoing call via the PSTN trunks 116 to a remote location. For example, if the user associated with first terminal 121 has a fax machine at home, the processor and database 151 can identify that fax terminal with the BCN for that user so that a requesting party can send a fax to that home location without knowing that user's home fax number. This, of course, has certain advantages of confidentiality.

Referring now to FIG. 4, there is shown a block diagram of another aspect of the implementation of the present invention. As shown, an originating caller 201 at a terminal places a call at 202 to a business communication number and requests a specific communications service associated with a particular subscriber. The originating party at 201 may place the call either over the PSTN by means of a dialer or modem 203 and may be aided by means of a database directory of selected business communication numbers with which it desires to communicate. The request is received by a processor and database 251 which includes a database memory 252 which associates certain elements with one another. In a first cell, for example, the business communication num- berwith which communication is desired is stored. In a second related cell 254, a particular service, i.e., fax, paging, modem, etc., is stored, and in cell 255, the response number necessary to make the required interconnection with the service is stored. Thereafter, the system takes the data from the response number stored at 255 and employs a modem or dialer 256 to effect communication by making a connection through the appropriate switch and communication line 257-260 to place a call to the appropriate terminal for the requested service. As can be seen, the necessary connection might even be made directly within a PBX which implements the switching function or the call may be placed on an outside line, of either a private data network or a PSTN, in order to effect the desired communication requested by the originating party 201.

As can be seen from the above description, the system of the present invention may be implemented in differentways, including convention PBX switching systems or in private data networks. In either case, it enables the completion of a call to a selected type of communication terminal assigned to a particular individual by accessing a single number and then indicating the nature of the communication service desired in order to reach that number.

It is thus believed that the operation and construction of the present invention will be apparent from the foregoing description. While the method, apparatus and system shown and described has been characterized as being preferred, it will be obvious that various changes and modifications can be made therein without departing from the spirit and scope of the invention as defined in the following claims.

## Claims

1. A method of completing a selected type of communication associated with a subscriber having a single business communications numberwithin a communications network, comprising:
storing within the subscriber's communications network in a table associated with a single business communication number of the subscriber, a secondary number associated with each one of a plurality of terminals capable of a particular type of communications;
sending to the subscriber's communications network along with the business communications number of the subscriber a signal indicative of a selected type of communications;
accessing the data stored in the table to obtain the secondary number for the selected type of communications with the subscriber associated with the business communications number; and
completing a call from the subscriber's communications network to a terminal associated with the accessed secondary number to enable said selected type of communications with the subscriber.

2. A method of completing a selected type of communication associated with a subscriber having a single business communications numberwithin a communications network as set forth in claim 1 wherein said secondary number associated with each of said plurality of terminals capable of a particular type of communications may be reassociated with a different business communications number.

3. A method of completing a selected type of communication associated with a subscriber having a single business communications numberwithin a communications network as set forth in claim 1 when said business communications number may be reassociated with a different group of one or more secondary numbers, each being associated with a terminal capable of a particular type of communications.

4. A method of completing a selected type of communication associated with a subscriber having a single business communications numberwithin a communications network as set forth in claim 1 wherein said secondary number associated with each of said plurality of terminals capable of a particular type of communications may be associated with more than one business communications number.

5. A method of completing a selected type of communication associated with a subscriber having a single business communications numberwithin a communications network as set forth in claim 1 wherein said plurality of terminals capable of a particular type of communications include terminals capable of either telecopy, voice mail, modem or voice telephone.

6. A method of completing a selected type of communication associated with a subscriber having a single business communications numberwithin a communications network as set forth in claim 1 wherein the communications network within which the business communications number of the subscriber is located is a private branch exchange.

7. A system for completing a selected type of communication associated with a subscriber having a single business communications numberwithin a communications network, comprising:
means for storing within the subscriber's communications network in a table associated with a single business communication number of the subscriber, a secondary number associated with each one of a plurality of terminals capable of a particular type of communications;
means for sending to the subscriber's communications network along with the business communications number of the subscriber a signal indicative of a selected type of communications;
means for accessing the data stored in the table to obtain the secondary number for the selected type of communications with the subscriber associated with the business communications number; and
means for completing a call from the subscriber's communications network to a terminal associated with the accessed secondary number to enable said selected type of communications with the subscriber.

8. A system for completing a selected type of communication associated with a subscriber having a single business communications numberwithin a communications network as set forth in claim 7 wherein said secondary number associated with each of said plurality of terminals capable of a particular type of communications may be reassociated with a different business communications number.

9. A system for completing a selected type of communication associated with a subscriber having a single business communications numberwithin a communications network as set forth in claim 7 wherein said business communications number may be reassociated with a different group of one or more secondary numbers, each being associated with a terminal capable of a particular type of communications.

10. A system for completing a selected type of communication associated with a subscriber having a single business communications number within a communications network as set forth in claims 7 wherein said secondary number associated with each of said plurality of terminals capable of a particular type of communications may be associated with more than one business communications number.

11. A system for completing a selected type of communication associated with a subscriber having a single business communications number within a communications network as set forth in claim 7 wherein said plurality of terminals capable of a particular type of communications include terminals capable of either telecopy, voice mail, modem or voice telephone.

12. A system for completing a selected type of communication associated with a subscriber having a single business communications number within a communications network as set forth in claim 7 wherein the communications network within which the business communications number of the subscriber is located is a private branch exchange.

13. A method for communicating with a telecommunication terminal, comprising:
associating a telephone subscriber with a business communications number identifying that subscriber within a communications network;
associating a plurality of different types of communications terminals with said subscriber, each terminal having a specific secondary number and each different type of communications having an identification code associated therewith;
sending to the communications network of that subscriber a signal which includes the business communications number of the subscriber along with an identification code specifying which type of communications with the subscriber is requested; and
completing the communication from the communications network of the subscriber to the secondary number of the particular type of communications terminal associated with the subscriber which was specified by the identification code sent with the business communications number.

14. A method for communicating with a telecommunication terminal as set forth in claim 13 wherein said secondary number associated with each of said plurality of terminals capable of a particular type of communications may be reassociated with a different business communications number.

15. A method for communicating with a telecommunication terminal as set forth in claim 13 wherein said business communications number may be reassociated with a different group of one or more secondary numbers, each being associated with a terminal capable of a particular type of communications.

16. A method for communicating with a telecommunication terminal as set forth in claims 13wherein said secondary number associated with each of said plurality of terminals capable of a particular type of communications may be associated with more than one business communications number.

17. A method for communicating with a telecommunication terminal as set forth in claim 13 wherein said plurality of terminals capable of a particular type of communications include terminals capable of either telecopy, voice mail, modem or voice telephone.

18. A method for communicating with a telecommunication terminal as set forth in claim 13 wherein the communications network within which the business communications number of the subscriber is located is a private branch exchange.

19. A system for communicating with a telecommunication terminal, comprising:
means for associating a telephone subscriber with a business communications number identifying that subscriber within a communications network;
means for associating a plurality of different types of communications terminals with said subscriber, each terminal having a specific secondary number and each different type of communications having an identification code associated therewith;
means for sending to the communications network of that subscriber a signal which includes the business communications number of the subscriber along with an identification code specifying which type of communications with the subscriber is requested; and
means for completing the communication from the communications network of the subscriber to the secondary number of the particular type of communications terminal associated with the subscriber which was specified by the identification code sent with the business communications number.

20. A system for communicating with a telecommunication terminal as set forth in claim 19 wherein said secondary number associated with each of said plurality of terminals capable of a particular type of communications may be reassociated with a different business communications number.

21. A system for communicating with a telecommunication terminal as set forth in claim 19 wherein said business communications number may be reassociated with a different group of one or more secondary numbers, each being associated with a terminal capable of a particular type of communications.

22. A system for communicating with a telecommunication terminal as set forth in claims 19 wherein said secondary number associated with each of said plurality of terminals capable of a particular type of communications may be associated with more than one business communications number.

23. A system for communicating with a telecommunication terminal as set forth in claim 19 wherein said plurality of terminals capable of a particular type of communications include terminals capable of either telecopy, voice mail, modem or voice telephone.

24. A system for communicating with a telecommunication terminal as set forth in claim 19 wherein the communications network within which the business communications number of the subscriber is located is a private branch exchange.
